# FASCICULE DE BREVET EUROPEEN

(11) **EP 0 715 363 B1**
(45) Date de publication et mention de la délivrance du brevet: **12.04.2000**
(21) Numéro de dépôt: 95402714.0
(22) Date de dépôt: 01.12.1995
(51) Int. Cl.: H01M 2/10, A45C 13/22

(54) **Elément de fixation d'une sangle de portage pour batteries d'accumulateurs et dispositif de portage amovible équipé de tels éléments**
Befestigungselement eines Tragebands für Akkumulatorbatterien und mit solchen Elementen ausgerüstete abnehmbare Tragevorrichtung
Fastening element of a carrying-strap for accumulator-batteries and detachable carrying device provided with such elements

(30) Priorité: 01.12.1994 FR 9414437
(43) Date de publication de la demande: 05.06.1996
(73) Titulaire: VB AUTOBATTERIE, 92400 Courbevoie (FR)
(72) Inventeur: Gomez, Mario, F-76250 Deville les Rouen (FR); Boucly, Jean-Michel, F-76000 Rouen (FR)
(74) Mandataire: CABINET BONNET-THIRION

(56) Documents cités:
- DE-U- 9 014 149
- FR-A- 2 646 406
- GB-A- 2 265 250
- US-A- 5 242 769

## Description

La présente invention concerne un élément de fixation de sangle de portage pour batteries d'accumulateurs. La présente invention concerne également un dispositif de portage amovible pour batteries d'accumulateurs équipé de tels éléments. L'invention se rapporte plus particulièrement à l'accrochage d'une poignée de sangle sur la partie supérieure d'accumulateurs, notamment d'accumulateurs au plomb, comportant des nervures de préhension (ou prise pour robot) sur deux des côtés en regard de son bac.

On connaît divers systèmes de portage amovibles pour batteries d'accumulateurs constitués de poignées de fixation reliées par une sangle s'accrochant en général sur le bas de la batterie. Ces systèmes existants ne sont cependant pas satisfaisants car ils imposent une modification du bac et/ou du couvercle de la batterie. Il existe donc un besoin industriel de disposer d'un système de portage amovible pour batterie d'accumulateurs ne nécessitant aucune modification de son bac ou de son couvercle.

La présente invention répond à un tel objet en fournissant un élément de fixation de sangle de portage amovible pour batteries d'accumulateurs dont le bac comporte sur ses côtés des nervures de préhension et l'invention a également pour objet un dispositif de portage amovible pour ces mêmes batteries d'accumulateurs comportant deux tels éléments de fixation moulés sur une sangle.

Le document GB-A-2 265 250 décrit un élément de fixation pour sangle de portage amovible pour une batterie d'accumulateur comportant un bac muni d'un couvercle bordé par une jupe et comportant sur chacune des deux parois latérales opposées au moins une nervure de préhension, ledit élément de fixation étant constitué d'un corps présentant, d'une part, au moins un téton de prise adapté à se placer sous la nervure de préhension et, d'autre part, au moins un doigt d'accrochage adapté à s'emboîter dans l'intervalle ménagé entre la jupe tombante du couvercle et le bac.

L'invention concerne plus particulièrement les batteries d'accumulateurs du genre comportant un bac à couvercle thermosoudé bordé par une jupe entourant à une certaine distance le haut du bac lequel est équipé sur chacune des deux faces opposées d'une paire de nervures de préhension selon la Norme Européenne 60005-2-section 6.

Dans ce contexte, l'élément de fixation selon l'invention est essentiellement caractérisé par le fait que, le bac comportant sur chacune des deux parois latérales opposées une paire de nervures de préhension séparées par un intervalle central, le corps de l'élément de fixation est adapté à se placer dans l'intervalle ménagé entre les nervures de préhension et présente, d'une part, deux tétons de prise latéralement saillants de part et d'autre du corps dont l'épaisseur correspond sensiblement à la largeur des nervures de préhension et adaptés à se placer chacun sous une nervure de préhension de ladite paire de nervures, et, d'autre part, deux doigts d'accrochage formant avec le corps une pince adaptée à s'emboîter sur la jupe du bac.

Grâce à ces dispositions, la mise en place de l'élément de fixation ne soumet pas la jupe à un effort de flexion prohibitif et, pendant le portage, l'élément de fixation ne risque pas de se désengager du bac.

Les caractéristiques et avantages de l'invention ressortiront d'ailleurs à la description qui va suivre à titre d'exemple en référence aux dessins annexés dans lesquels :
La figure 1 est une vue en perspective d'une batterie d'accumulateurs et d'une fixation selon l'invention qui lui est présentée de face ;
la figure 2 est une vue semblable montrant la fixation accrochée sur la batterie ;
la figure 3 est une vue de face d'une fixation selon l'invention ;
la figure 4 est une vue en coupe selon le plan IV-IV de la figure 2.

Suivant la forme de réalisation choisie et représentée l'invention est appliquée à une batterie au plomb 10 réalisée de manière usuelle dans un bac 11 de forme générale parallélépipédique associé à un couvercle 12 thermosoudé et bordé d'une jupe périphérique 13. Sur chacune des deux faces latérales opposées le bac présente deux nervures de préhension 14, 15 de part et d'autre d'un intervalle central 16. Une nervure 17 de hauteur réduite représentée en traits mixtes peut être présente entre les deux nervures de préhension et en prolongement de celles-ci pour y former un rebord de renfort.

Le dispositif de portage selon l'invention comporte de manière en soi connue une sangle 20 s'étendant entre deux éléments de fixation 21 respectivement solidarisés avec ses deux extrémités.

Selon l'invention chacun de ces éléments de fixation est une pièce formant pince d'accrochage avec un corps 22 solidarisé par moulage avec une partie terminale de la sangle 20 et présentant de part et d'autre de ce corps deux tétons de prise 23, 24 latéralement saillants. La dimension L en épaisseur de la pièce ainsi formée correspond sensiblement à la largeur des nervures de préhension 14, 15 du bac associé.

Du côté frontal, c'est-à-dire tourné vers la batterie, comme il est mieux visible sur la figure 3, l'élément de fixation présente deux doigts d'accrochage 25, 26 adaptés à s'emboîter dans l'intervalle ménagé entre la jupe tombante 13 du couvercle et le corps 11 du bac.

Enfin, à la base de ces doigts et au dessus des tétons de prise 23, 24 est ménagée une feuillure 28 adaptée à s'emboîter sur le rebord 17.

Pour sa mise en place l'élément la fixation 21 est présenté légèrement en biais en regard de la jupe 13 du couvercle pour engagement de son corps 22 dans l'intervalle 16 séparant les nervures de préhension 14, 15. Les doigts 25, 26 forment avec les corps 22 une pince adaptée à s'emboîter sur la jupe. Simultanément avec cet emboîtement engageant les doigts 25, 26 sous la jupe 13, le corps 22 est rabattu contre la paroi du bac pour accrochage des tétons de prise 23, 24 sous les nervures de préhension 14, 15. Le rebord 17, s'il existe, se trouve de son côté emboîté ainsi dans la feuillure 28.

On voit que l'élément de fixation en forme de pince ainsi constitué assure une solidarisation de la sangle et avec le bac et avec le couvercle avec une excellente efficacité, l'élasticité de la jupe du couvercle maintenant la pince en position. Alors que la fonction de portage est assurée principalement par les tétons de prise 23, 24 et éventuellement par la feuillure 28, on peut considérer que la fonction d'accrochage de l'élément est assurée par la pince constituée avec le corps 22 par les doigts 25, 26.

Le démontage s'effectue très simplement en écartant d'abord le corps 22 de la pince pour dégager les tétons de prise 23, 24 des nervures de préhension 14, 15, puis en tirant obliquement vers le bas pour extraire les doigts d'accrochage 25, 26 de la jupe du couvercle.

Les dispositifs de portage de la présente invention sont obtenus par moulage des éléments 21 sur une sangle 20, généralement en fils de polypropylène, et sont réalisés dans un matériau approprié pour ce genre d'application, par exemple un mélange de polymère et de copolymère de polypropylène.

## Revendications

1. Elément de fixation pour sangle de portage amovible pour une batterie d'accumulateur (10) comportant un bac (11) muni d'un couvercle (12) bordé par une jupe (13) et comportant sur chacune des deux parois latérales opposées au moins une nervure de préhension, ledit élément de fixation étant constitué d'un corps (22) présentant, d'une part, au moins un téton de prise adapté à se placer sous la nervure de préhension et, d'autre part, au moins un doigt d'accrochage adapté à s'emboîter dans l'intervalle ménagé entre la jupe tombante (13) du couvercle (12) et le bac (11), caractérisé par le fait que, le bac (11) comportant sur chacune des deux parois latérales opposées une paire de nervures de préhension (14, 15) séparées par un intervalle (16) central, le corps (22) de l'élément de fixation est adapté à se placer dans l'intervalle ménagé entre les nervures de préhension et présente, d'une part, deux tétons de prise (23, 24) latéralement saillants de part et d'autre du corps (22) dont l'épaisseur correspond sensiblement à la largeur des nervures de préhension (14, 15) et adaptés à se placer chacun sous une nervure de préhension (14, 15) de ladite paire de nervures, et, d'autre part, deux doigts d'accrochage (25, 26) formant avec le corps (22) une pince adaptée à s'emboîter sur la jupe (13) du bac (11).

2. Elément de fixation selon la revendication 1, caractérisé en ce qu'il comporte entre les doigts d'accrochage (25, 26) et les tétons de prise (23,24) une feuillure (28) adaptée à coopérer par emboîtement avec un rebord de renfort (17) situé entre deux nervures de préhension adjacentes (14, 15).

3. Dispositif de portage amovible pour batteries d'accumulateurs, constitué par deux éléments de fixation moulés sur une sangle (20), caractérisé en ce que chacun desdits éléments de fixation est constitué par un élément de fixation selon la revendication 1 ou 2.

## Patentansprüche

1. Befestigungselement für ein abnehmbares Trageband für eine Akkumulatorbatterie (10), umfassend einen Kasten (11), der mit einem Deckel (12) mit umlaufender Schürze (13) versehen ist und auf jeder der beiden gegenüberliegenden Seitenwände zumindest eine Greifrippe bzw. -rille aufweist, welches Befestigungselement durch einen Körper (22) gebildet ist, der einerseits mindestens ein Anschlußstück, das unter der Greifrippe angeordnet werden kann, und andererseits mindestens einen Befestigungsstift, der in den zwischen der sich nach unten erstreckenden Schürze (13) des Deckels (12) und dem Kasten (11) vorgesehenen Zwischenraum einsteckbar ist, aufweist, dadurch gekennzeichnet, daß, da der Kasten (11) auf jeder der beiden gegenüberliegenden Seitenwände ein Paar durch einen zentralen Zwischenraum (16) getrennte Greifrippen bzw. -rillen (14, 15) aufweist, der Körper (22) des Befestigungselements so konzipiert ist, daß er in dem zwischen den Greifrippen vorgesehenen Zwischenraum angeordnet werden kann und einerseits zwei seitlich auf jeder Seite des Körpers (22) abstehende Anschlußstücke (23, 24), deren Dicke im wesentlichen der Breite der Greifrippen (14, 15) entspricht und die jeweils unterhalb einer Greifrippe (14, 15) des Paares von Rippen in Lage kommen können, und andererseits zwei Befestigungsstifte (25, 26), die mit dem Körper (22) eine auf die Schürze (13) des Kastens (11) aufsteckbare Klemme bilden, aufweist.

2. Befestigungselement nach Anspruch 1, dadurch gekennzeichnet, daß es zwischen den Befestigungsstiften (25, 26) und den Anschlußstücken (23, 24) eine Fuge bzw. Falz (28) aufweist, die durch Ineinanderstecken mit einem zwischen zwei benachbarten Greifrippen (14, 15) vorgesehenen Versteifungsbord (17) zusammenwirken kann.

3. Abnehmbare Tragevorrichtung für Akkumulatorbatterien, bestehend aus zwei an einem Band (20) angeformten Befestigungselementen, dadurch gekennzeichnet, daß jedes dieser Befestigungselemente durch ein Befestigungselement nach Anspruch 1 oder 2 gebildet ist.

## Claims

1. A fastening element for a detachable carrying strap for a storage battery (10), comprising a container (11) provided with a cover (12) bordered by a skirt (13), and comprising on each of two opposite side walls at least one grip rib, said fastening element being formed by a body (22) having, on the one hand, at least one engagement stud adapted to be placed under the grip rib and, on the other hand, at least one coupling pin adapted to be fitted into the space provided between the descending skirt (13) of the cover (12) and the container (11), characterised in that since the container (11) comprises on each of two opposite side walls a pair of grip ribs (14,15) separated by a central space (16), the body (22) of the fastening element is adapted to be placed in the space provided between the grip ribs and has, on the one hand, two engagement studs (23,24) laterally projecting on either side of the body (22), the thickness of which corresponds substantially to the width of the grip ribs (14,15) and each adapted to be placed under one grip rib (14,15) of said pair of ribs, and, on the other hand, two coupling pins (25,26) forming with the body (22) a clamp adapted to be fitted on to the skirt (13) of the container (11).

2. A fastening element according to claim 1,
characterised in that between the coupling pins (25,26) and the engagement studs (23,24) it comprises a groove (28) adapted to co-operate by engagement with a reinforcing flange (17) disposed between two adjacent grip ribs (14,15).

3. A detachable carrying device for storage batteries, formed by two fastening elements moulded on a strap (20), characterised in that each of said fastening elements is formed by a fastening element according to claim 1 or 2.
